# EUROPÄISCHE PATENTSCHRIFT

(11) **EP 1 914 204 B1**
(45) Veröffentlichungstag und Bekanntmachung des Hinweises auf die Patenterteilung: **28.07.2010**
(21) Anmeldenummer: 07018161.5
(22) Anmeldetag: 15.09.2007
(51) Int. Cl.: C02F 3/12, B65D 88/76, B65D 90/00, B29C 41/06

(54) **Kunststoffbehälter**
Plastic container
Récipient en matière synthétique

(30) Priorität: 29.09.2006 DE 202006015139 U
(43) Veröffentlichungstag der Anmeldung: 23.04.2008
(73) Patentinhaber: KVT Klävertec GmbH, 21762 Otterndorf (DE)
(72) Erfinder: Köster, Wilfried, 21762 Otterndorf (DE)
(74) Vertreter: Hansen, Jochen

(56) Entgegenhaltungen:
- EP-A- 0 211 965
- EP-A- 1 264 676
- EP-A- 1 806 458
- WO-A-2004/026711
- WO-A-2005/051805
- WO-A-2006/128229
- US-A- 3 433 723
- US-A- 3 600 754
- US-A- 5 318 811
- US-A1- 2003 136 789
- US-B1- 6 328 890

## Beschreibung

Die Erfindung betrifft einen Kunststoffbehälter insbesondere für Kleinkläranlagen mit Außenwänden, einem Bodenbereich und einem Kopfbereich, wobei der Behälter zwei Becken aufweist, die durch Trennwände voneinander getrennt sind.

Behälter für Kleinkläranlagen sind häufig als zylindrische, stehende Betonbehälter mit eingeformten oder nachträglich eingesetzten vertikalen Trennwänden bekannt. Bei derartigen Klärbehältern ist im Kopfbereich eine einzige gemeinsame Revisionsöffnung (Mannöffnung) vorgesehen. Entsprechend enden die im Behälter angeordneten Trennwände unterhalb der Revisionsöffnung und oberhalb des maximalen Wasserstandes.

Ferner sind Kunststoffklärbehälter bekannt, die beispielsweise in Form eines liegenden Zylinders mit einer mittig in der Zylindermantelfläche domartig ausgebildeten einzelnen Revisionsöffnung ausgebildet sind. Diese Kunststoffbehälter haben entweder keine Unterteilungen, dienen also jeweils entweder als Vorklärbecken, Hauptklärbecken oder Nachklärbecken, so dass für eine übliche Kläranlage zwei oder drei getrennte Behälter zu installieren sind, oder verfügen über nachträglich eingesetzte Trennwände, die ebenfalls vor dem Kopfbereich des Behälters enden.

Nachteilig ist bei zwei oder drei gesonderten Behältern ein erheblicher Installationsaufwand, da die Leitungsverbindungen von einem zum anderen Behälter durch das umgebende Erdreich geführt und zweifach eingedichtet werden müssen. Ferner sind entsprechende Baugruben zu erstellen, so dass auch ein erheblich größerer Flächenbedarf entsteht. Bei nachträglich eingesetzten Trennwänden ist demgegenüber die dauerhafte und dichte Verklebung und Befestigung der Trennwände nicht gewährleistet. Dies führt bei nachträglich eingesetzten Trennwänden häufig zu Strömungskurzschlüssen zwischen den aneinander grenzenden Becken, so dass die Reinigungsleistung der Kläranlage beeinträchtigt oder gar ausgeschaltet wird. Ferner sind nachträglich eingesetzte Trennwände im Fertigungsverfahren durch den hohen manuellen Arbeitsanteil teuer und in der Fertigungsqualität kritisch.

Die US 3,433,723 beschreibt eine Wasserbehandlungsmethode zur Herstellung einer unterchlorigen Säure und gleichmäßigen Verteilung dieser in einem Wasserkörper. Dabei dienen verschiedene Kammern als Elektrolytbad. Die Kammern sind durch eine als Überlaufkante ausgebildete, spitz aufwölbende Trennwand" gegliedert.

Die WO 2005/051805 beschreibt einzelne Wasserbehandlungstanks, die zwar im Einzelnen im Rotoverfahren hergestellt sind, jedoch jeweils nur einen einzelnen Raum aufspannen.

Die US 3,600,754 lehrt, dass große Tanks im Rotoverfahren hergestellt werden und dadurch großen Kräften ausgesetzt werden können.

Aus der EP 0 211 965 A1 ist ein Lagerbehälter aus thermoplastischem Kunststoff für Flüssigkeiten, insbesondere für Heizöl, sowie Verfahren und Form zu seiner Herstellung bekannt, bei dem der Behälter in einer Rotationsform bestehend aus zwei Elementarbehältern, die über Verbindungskanäle miteinander kommunizieren, einteilig geformt wird.

Aufgabe der vorliegenden Erfindung ist es daher, einen Kunststoffbehälter anzugeben, der die für eine Kleinkläranlage erforderlichen Becken, nämlich Vorklärbecken, Hauptklärbecken und ggf. Nachklärbecken in einem Gehäuse aufnimmt, wobei die Trennung zwischen den Becken dauerhaft dicht erfolgt.

Gelöst wird die vorgenannte Aufgabe mit einem Kunststoffbehälter gemäß Anspruch 1.

Dadurch, dass für die wenigstens zwei in einer Kleinkläranlage erforderlichen Becken je eine Zugriffsöffnung (Mannloch) vorgesehen ist, können die einzelnen Becken vollständig getrennt voneinander, also mit bis oben hin geschlossenen Trennwänden hergestellt werden. Entsprechend reichen die Trennwände vom Bodenbereich bis zum Kopfbereich, lassen also im Behälter im Kopfbereich keinen Freiraum frei. Fertigungstechnisch ist es dabei vorteilhaft, dass die Trennwände durch Aufwölbungen vom Bodenbereich erstellt werden. Es wird quasi eine doppelwandige Trennwand zwischen zwei aneinander grenzenden Becken erzeugt, da zunächst vom Bodenbereich ein Wandungsbereich fast senkrecht nach oben bis zum Kopfbereich aufsteht, dort in einem spitzen Winkel zurückgefaltet ist und wiederum fast senkrecht aufstehend in den Bodenbereich des angrenzenden Beckens mündet. Durch die Verbindung von Trennwand und Kopfbereich ist der Kopfbereich versteift, so dass der Behälter im eingebauten Zustand auch entsprechende Auflasten aufnehmen kann.

Bei dieser Ausgestaltung ist es möglich, den Behälter einstückig im Rotationsverfahren oder sog. Rotationsformen herzustellen. Beim Rotationsformen oder Rotationsgießen (Englisch: rotation molding) wird lediglich eine Außenform (Negativform) des zu fertigenden Gegenstandes erstellt. In diese Außenform wird die für die Erstellung erforderliche Kunststoffmenge in Form von Granulat, insbesondere Polyethylen, eingegeben. Für den Formungsprozess wird die Außenform und damit das darin befindliche Kunststoffgranulat erhitzt, beispielsweise auf 300°C und gleichzeitig um zwei Achsen rotiert. Durch die Erhitzung schmilzt das Kunststoffgranulat auf und zerfließt unterstützt von den beim Rotieren entstehenden Fliehkräften auf der inneren Oberfläche der Außenform. Nach ca. ½ bis 1 Stunde ist das Kunststoffgranulat aufgeschmolzen und verteilt, so dass dann der Abkühlungsprozess eingeleitet wird. Nach der Aushärtung wird der einstückig in der Außenform erzeugte Kunststoffbehälter entnommen.

Bevorzugt sind drei voneinander durch Trennwände getrennte Becken als Vorklärbecken, Hauptklärbecken und Nachklärbecken vorgesehen. Dabei entsteht bei dem vorgenannten Herstellungsverfahren anhand der gegenständlich gewählten Ausgestaltung des Behälters mit drei Öffnungen und den besonders gestalteten Trennwänden, ein einstückiger Kunststoffbehälter mit einrotierten Trennwänden, die drei voneinander getrennte Becken, nämlich ein Vorklärbecken, ein Hauptklärbecken und ein Nachklärbecken bilden.

Wenn die Außenwände vom Bodenbereich leicht in einem Winkel von 1 ° bis 5° zur Vertikalen nach innen geneigt aufstehen, hat der bestimmungsgemäß im Boden eingebrachte Kunststoffbehälter einen "Dübel"- oder "Stopfen"-Effekt, um eine unerwünschte Auftriebsbewegung des Behälters im Boden zu vermeiden. Ferner können fertigungstechnisch die sich konisch zum Kopfbereich verjüngenden Behälter leichter aus der Außenform beim Fertigungsprozess entnommen werden.

Dadurch, dass im Übergang zwischen Bodenbereich und Außenwänden eine nach außen vorstehende, umlaufende Wulst ausgebildet ist, wird eine weitere Auftriebssicherung des Behältes im Boden ergänzend oder alternativ zum vorgenannten Merkmal bereitgestellt.

Wenn der Bodenbereich planebene Flächenabschnitte aufweist, die bei bestimmungsgemäßer Lage des Behälters auf einer untersten horizontalen Ebene liegen, kann der Behälter mit seinem planebenen Flächenabschnitten im Bodenbereich unmittelbar auf eine in der Baugrube erzeugte planebene Fläche aufgestellt werden.

Für den Einbau eines erfindungsgemäßen Kunststoffbehälters wird zunächst eine Baugrube in der erforderlichen Tiefe und Größe erstellt. Der Boden der Baugrube wird anschließend mit einer Sandschicht versehen, die planeben verfestigt (gerüttelt) wird. Auf diese planebene Fläche kann nun der Kunststoffbehälter mit seinen planebenen Flächenabschnitten des Bodenbereichs aufgestellt werden. Anschließend wird der Randbereich zwischen Behälter und Baugrube gefüllt und verfestigt. Die Auflast des Füllsandes auf dem umlaufenden Wulst und/oder auf den vom Bodenbereich leicht in einem Winkel zur Vertikalen nach innen geneigten Außenwänden verhindert ein Auftreiben des Behälters im Untergrund.

In weiterer Ausgestaltung ist die dem jeweiligen Becken im Kopfbereich zugeordnete Öffnung eine Mannöffnung mit zugeordnetem, abnehmbaren Deckel, um einen Zugriff in den Innenraum der jeweiligen Becken zur Installation der erforderlichen Technik und später zur Wartung zu ermöglichen.

Bevorzugt weist die Öffnung ein den Kopfbereich überragenden zylindrischen Domabschnitt auf, in dessen oberen Rand der kreisscheibenförmige Deckel dichtend einlegbar ist. Damit wird eine erwünschte Bodenüberdeckung oberhalb des Behälters erreicht, die einen Frostschutz für den Innenbereich des Behälters bewirkt. Ferner ist noch ausreichend Platz oberhalb des Kopfbereiches des Behälters um kleineren Pflanzenbewuchs an der Oberfläche oberhalb des Behälters zu erlauben.

Dadurch, dass die Becken um ein Zentrum angeordnet sind, wobei das Zentrum eine im wesentlichen vertikal orientierte Durchgriffsöffnung bildet, bei der der für die Trennwände aufgewölbte Bodenbereich bis an den Kopfbereich reicht, wird ein Befüllen des bis zum Boden reichenden Hohlraumes zwischen den Trennwänden und den im Zentrum aneinander grenzenden Becken ermöglicht. Beim Verfüllen der Baugrube wird Füllsand durch die Durchgriffsöffnung in diesen Hohlraum eingebracht. Bevorzugt weist die im Zentrum angeordnete Durchgriffsöffnung annähernde, stehende Kegelstumpfform auf.

Wenn der Kunststoffbehälter im wesentlichen quadratischen Grundriss hat, wobei das Vorklärbecken zwei aneinander grenzende Quadranten, das Hauptklärbecken einen Quadranten und das Nachklärbecken den letzten Quadranten des Grundrisses einnimmt, können die für eine Kleinkläranlage erforderlichen Volumen zwischen Vorklärbecken, Hauptklärbecken und Nachklärbecken nachgebildet werden. Der quadratische Grundriss erleichtert die Handhabung, Lagerhaltung sowie den Einbau. Quaderförmige Gruben lassen sich mit den üblichen Tiefbaugeräten leichter erstellen als zylindrische Baugruben.

Für einen Transport der Kunststoffbehälter in Standard 20'- oder 40'-Containern ist es erforderlich, dass der Kunststoffbehälter eine Breite von kleiner gleich 2,34 m und einen Höhe von kleiner gleich 2,29 m hat, da derartige Conainer eine Türinnenbreite von 2,34 m und eine Türinnenhöhe von 2,29 m haben. In einen 20'-Container passen dann 3 bzw. in einen 40'-Container 6 derartige Behälter.

Bevorzugt ist der Kunststoffbehälter aus Polyethylen hergestellt und die Wandungen der Außenwände, der Trennwände, des Kopfbereichs und des Bodenbereichs haben eine Stärke von 6 mm bis 20 mm, bevorzugt 8 mm bis 15 mm. Bei einer Wandstärke von 8 bis 10 mm weist der erfindungsgemäße Kunststoffbehälter in der vorgenannten Größenordnung von ca. 2,25 m x 2,25 m Grundfläche und 2,25 m Höhe ein Gewicht von ca. 350 kg auf.

Wenn am Kopfbereich wenigstens zwei einander diametral gegenüber liegende Kranösen angeformt sind, kann der Kunststoffbehälter mit einem Bagger und einfachen Ladestropps vor Ort vom Tiefbauunternehmen vom Transport-LKW abgehoben und in die Baugrube eingesetzt werden, ohne dass ein spezieller Lastenkran erforderlich ist.

Wenn die Außenwände eine Vielzahl von Sicken aufweisen, werden die Außenwände des Behälters versteift, so dass auch hohe im Untergrund wirkende Lasten von der Behälterwandung aufgenommen werden können. Insgesamt kann bei der erfindungsgemäßen Ausgestaltung des Kunststoffbehälters auf Bewehrungsmaterial im Kunststoff verzichtet werden.

Zur Erleichterung der Montage der Zulauf- und Ablaufleitungen sind an der Außenwand im Bereich des Vorklärbeckens und im Bereich des Nachklärbeckens nahe des Kopfbereichs vertikal orientierte, plane Montageflächen zur Anbringung von Zulauf und Ablauf vorgesehen. Ferner ist eine plane Anschlussfläche an der Außenwand im Bereich des Hauptklärbeckens nahe des Kopfbereichs angeordnet, um dort Steuer- und/oder Versorgungsleitungen, insbesondere Druckluftschlauchleitung in den Behälter einführen zu können. Bevorzugt sind diese Leitungen in einem Schutzrohr, das dichtend dort angeschlossen ist, durch das angrenzende Erdreich geführt.

Nachfolgend wird ein Ausführungsbeispiel der Erfindung anhand der beiliegenden Zeichnungen detailliert beschrieben.

Darin zeigt:
- Fig. 1: einen Kunststoffbehälter in räumlicher Ansicht,
- Fig. 2: einen Querschnitt entlang einer X-Y-Ebene durch den Behälter gemäß Fig. 1 und
- Fig. 3: einen Schnitt entlang der Y-Z-Ebene durch einen Kunststoffbehälter gemäß Fig. 1.

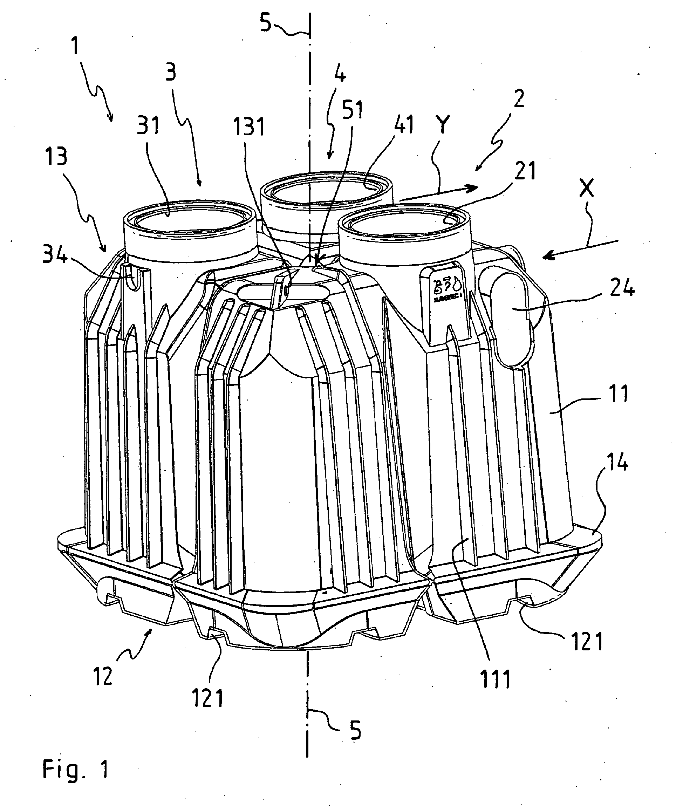

In Fig. 1 ist ein Kunststoffbehälter 1 in einer räumlichen Ansicht dargestellt. Der Kunststoffbehälter 1 weist im wesentlichen quadratischen Grundriss auf. Der Behälter 1 besteht aus Außenwänden 11, einem Bodenbereich 12 und einem Kopfbereich 13. Im Behälter 1 sind einstückig Trennwände 23 eingeformt, die den Behälter 1 in ein Vorklärbecken 2, ein Hauptklärbecken 3 und ein Nachklärbecken 4 aufteilen. Jedes Becken 2, 3, 4 weist im Kopfbereich 13 des Kunststoffbehälters 1 eine Öffnung 21, 31 bzw. 41 auf, die einen abnehmbaren, in den Fig. nicht dargestellten Deckel aufweisen. Bevorzugt sind die Öffnungen 21, 31, 41 mit jeweils den Kopfbereich 13 überragenden zylindrischen Domabschnitten ausgestattet, um oberhalb des Kopfbereichs 13 bei bestimmungsgemäßem Einbau des Behälters 1 im Untergrund eine ausreichend frostschützende Bodenbedeckung aufweisen zu können.

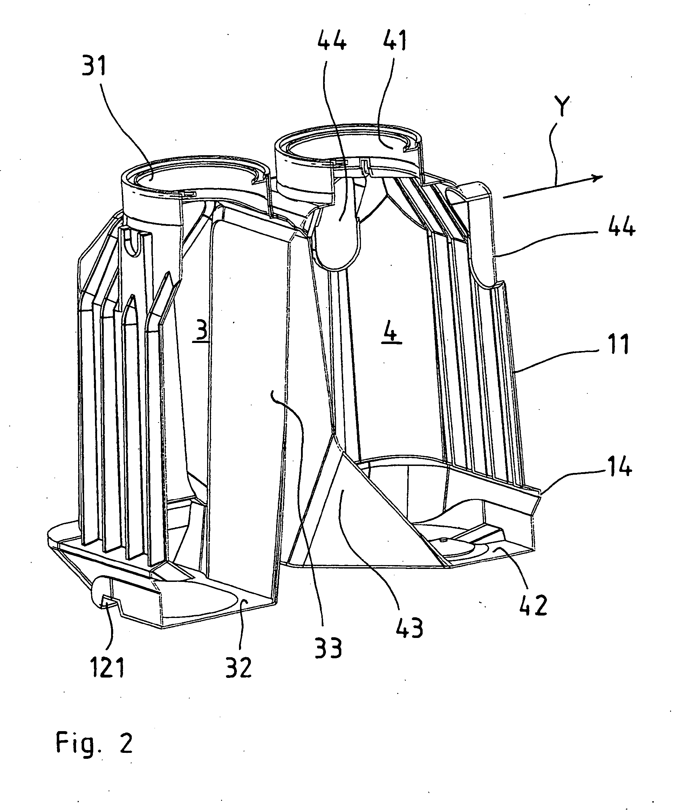

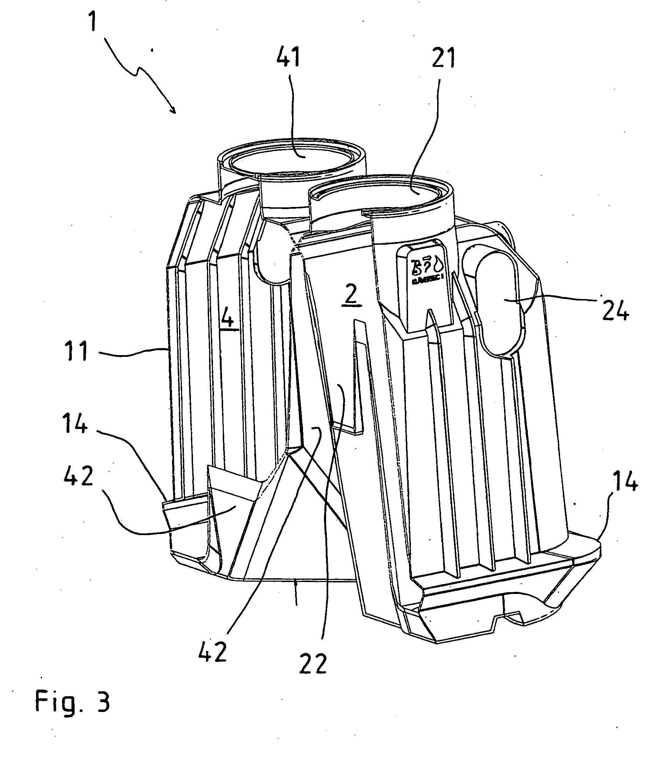

Der Bodenbereich 12 weist, wie in Figuren 2 und 3 erkennbar, planebene Flächenabschnitte 22, 32, 42 auf, die den jeweiligen Klärbecken 2, 3, 4 zugeordnet sind. Zwischen zwei aneinander grenzenden Becken sind spitze Aufwölbungen vom Bodenbereich 12 bis zum Kopfbereich 13 ausgebildet, die die zum jeweiligen Becken gehörenden Trennwände 23, 33, 43 bilden.

Im quadratischen Grundriss des Kunststoffbehälters 1 nehmen in dem dargestellten Ausführungsbeispiel das Vorklärbecken 2 zwei Quadranten, das Hauptklärbecken 3 mit der darin befindlichen Biologie einen Quadranten und das Nachklärbecken 4 den letzten Quadranten der quadratischen Grundfläche ein. Dementsprechend sind die Becken 2, 3, 4 um ein Zentrum 5 entsprechend einer vertikalen Behältermittellinie gruppiert. Dabei ist im Zentrum 5 eine Durchgriffsöffnung 51 vorgesehen, die unterhalb des Kopfbereichs 13 des Kunststoffbehälters 1 eine annähernd stehende Kegelstumpfform aufweist und von oberhalb des Kopfbereichs 13, zwischen den Öffnungen 21, 31, 41 von oben zur Verfüllung Zugriff erlaubt.

Beim Übergang vom Bodenbereich 12 zu den Außenwänden 11 ist ein nach außen vorstehender, umlaufender Wulst 14 ausgebildet, der eine zusätzliche Versteifung des Behälters 1 und eine Auftriebssicherung für den Behälter bereitstellt.

Ferner sind an der Außenwand 11 im Bereich des Vorklärbeckens 2 und im Bereich des Nachklärbeckens 4 nahe des Kopfbereichs 13 vertikal orientierte, plane Montageflächen 24 (siehe Fig. 1 und 3) bzw. 44 (siehe Fig. 2 und 3) zur Anbringung von Zulauf und Ablauf vorgesehen. In Fig. 1 ist der Zulauf durch Pfeil X und der Ablauf durch Pfeil Y gekennzeichnet. Ferner ist eine plane Anschlussfläche 34 an der Außenwand 11 im Bereich des Hauptklärbeckens 3 nahe des Kopfbereichs 13 angeordnet, um dort Steuer- und/oder Versorgungsleitungen, insbesondere Druckluftschlauchleitung in den Behälter einführen zu können. Bevorzugt sind diese Leitungen in einem Schutzrohr, das dichtend dort angeschlossen ist, durch das angrenzende Erdreich geführt.

Am Kopfbereich 13 sind wenigstens zwei einander diametral gegenüberliegende Kranösen 131 angeformt. Die Kranösen 131 vereinfachen die Handhabung des Behälters 1 beim Herablassen in die Einbaugrube sowie bei erforderlichen Handhabungen während der Herstellung, der Lagerung oder des Transports. Zur weiteren vereinfachten Handhabung bei Lagerung, Transport und Einbau sind im Bodenbereich 12 Gabelstapleraufnahmen 121 vorgesehen.

Um die Festigkeit der Außenwände 11 gegen Druckbelastungen des Erdreichs zu erhöhen, sind eine Vielzahl von Sicken 111 in den Außenwänden 11 vorgesehen. Bei dieser Ausgestaltung und einer Materialstärke von ca. 8 bis 10 mm kann der Kunststoffbehälter 1 ohne gesondertes Bewehrungsmaterial erstellt werden.

Nachfolgend wird zunächst das Herstellungsverfahren des Behälters 1, nachfolgend der Transport und Einbau des Behälters im Untergrund und die Installation etwaiger Technikkomponenten im Behälter beschrieben.

Der Behälter 1 wird im sog. Rotationsformen in einer Außenform erstellt, die die Außenform des Behälters in Negativform wiedergibt. Beim Rotationsformen wird in diese Außenform die für den Herstellungsprozess erforderliche Kunststoffmenge in Form von Polyethylengranulat eingefüllt, die Außenform und damit der Innenraum auf ca. 300°C erwärmt und die Außenform um zwei zueinander senkrecht stehende Achsen rotiert.

Bevorzugt ist dies die durchs Zentrum 5 gehende Vertikalachse, sowie eine dazu senkrecht stehende, mittig durch den Behälter gehende weitere Rotationsachse. Nach einer Rotationsdauer von ca. ½ bis 1 Stunde ist das Granulat vollständig aufgeschmolzen und durch die Rotationsbewegungen vollflächig auf der Innenseite der Außenform zu einer im wesentlichen gleichmäßigen Schicht verteilt.

Die Aufwölbungen vom Bodenbereich 12, die die Trennwände 23, 33, 43 bilden sollen, werden dabei durch entsprechend in die Außenform ragende "schwertförmige" Unterteilungen erzeugt. Diese schwertförmigen Unterteilungen laufen in der Außenform bis nahe an die Außenform des Kopfbereiches 13 bzw. der Außenwände 11 heran, weisen jedoch noch einen Abstand von ca. der 2-fachen Schichtdicke auf, so dass beim Rotationsformen sich an dieser Stelle eine sog. "Kiss off"-Struktur ergibt, nämlich eine im Querschnitt "X-förmige" Verbindung des Kopfbereiches 13 mit den Trennwänden 23, 43 (siehe Fig. 3) bzw. 33 und 43 (siehe Fig. 2) und eine Verbindung der Außenwand 11 mit den Trennwänden 23, 33, 43 ergibt. Durch diese Herstellungsweise werden einerseits voneinander geschlossene Becken 2, 3, 4 erzeugt und andererseits eine materialmäßig ausreichend sichere Verbindung zwischen den Strukturen Kopfbereich 13 und Trennwände 23, 33, 43 bzw. Außenwand 11 und Trennwände 23, 33, 43 erreicht.

Nach dem Abkühlen des Behälters 1 wird dieser aus der Außenform entnommen und für Lagerung bzw. Transport bereitgestellt.

Der Behälter kann nun in Abhängigkeit seines Verwendungszwecks ausgerüstet werden. Neben der Verwendung für Kleinkläranlagen nach dem Wirbel-Schwebebettverfahren oder dem SBR-Verfahren bieten sich auch weitere Anwendungsgebiete an. Beispielsweise kann der Kunststoffbehälter auch als Abscheider für Abwässer von Tankstellen oder Industriebetrieben verwendet werden, wobei das Vorklärbecken 2 dann als Schlammfang, das Hauptklärbecken 3, beispielsweise als Benzinabscheider und das Nachklärbecken 4 als Fettabscheider oder Stärkeabscheider dienen. Im Stand der Technik sind derartige Abscheider meist in zwei bis drei Behältern verteilt angeordnet.

Ferner kann der Kunststoffbehälter 1 auch als Teichfilter für Schwimm- und Badeteiche und Fischteiche angewendet werden, wobei das Vorklärbecken 2 wiederum ein Schlammfang für gröbere Schmutzpartikel ist und die nachfolgenden Becken, Hauptklärbecken 3 und Nachklärbecken 4, weitere und feinere Filterfunktionen übernehmen können.

Um zwischen den Becken 2, 3, 4 die für den gewünschten Verfahrensablauf erforderlichen Interaktionen zu ermöglichen, sind Verbindungsleitungen in Form von Überlauföffnungen, Saug- oder Pumpleitungen, Heberleitungen oder dergleichen in den Behälter 1 einzusetzen. Dies erfolgt nach Fertigstellung des Behälters 1 in Vorgriff oder unmittelbar beim Einbau des Behälters im Untergrund. Die Verbindungsleitungen werden dabei für den gewünschten Verwendungszweck ausgewählt und entsprechend montiert. Dafür können Monteure über die Mannöffnungen 21, 31, 41 in die Becken 2, 3, 4 einsteigen und von dort die Installationen vornehmen.

Bei Verwendung des Kunststoffbehälters 1 als Kleinkläranlage, wird an der Montagefläche 24 wenigstens ein Zulauf X, beispielsweise in Form eines KG-Rohres angeschlossen, mit dem das zu klärende Abwasser der Kläranlage und dort dem Vorklärbecken 2 zugeführt wird. Im Vorklärbecken 2 erfolgt eine Abscheidung von Schlamm, der sich am Boden des Vorklärbeckens 2 sammelt. Da das Vorklärbecken 2 im dargestellten Ausführungsbeispiel zwei Quadranten der quadratischen Grundfläche des Behälters 1 einnimmt und zur Versteifung zwischen diesen beiden Quadranten ebenfalls eine leicht erhöhte Schwelle 25, wie in Fig. 3 ersichtlich, vorhanden ist, fällt im zweiten Teil des Vorklärbeckens 2 bereits weniger Schlamm an. Bedarfsweise kann in dem Vorklärbecken 2, bevorzugt an seinen beiden tiefsten Punkten, ein Schlammheber angeordnet sein.

Vom zweiten Teil des Vorklärbeckens 2 ist durch die Trennwände 23 und 33 ein Überlauf in Höhe des gewünschten Wasserspiegels zum Hauptklärbecken 3 vorzusehen. Der Überlauf wird von den Monteuren mit einer Lochsäge in die Trennwände 23, 33 eingebohrt. Dieses Loch wird mit einem Gummidichtring versehen und darin ein Überlaufrohr dichtend eingesetzt. Diese Verbindung hat gegenüber einer Kunststoffschweißung den Vorteil, dass Relativbewegungen zwischen den aneinander grenzenden Trennwänden 23 und 33 nicht zu Undichtigkeiten führen.

Im Hauptklärbecken 3 ist in bevorzugter Ausgestaltung bei einer Kleinkläranlage die sog. biologische Reinigungsstufe mit im Wasser schwebenden Biofilmaufwuchskörpern vorzusehen. Diese biologische Reinigungsstufe benötigt eine intermittierende Belüftung, so dass an der Anschlussfläche 34 am Hauptklärbecken 3 nahe des Kopfbereiches 13 ein Druckluftschlauch, bevorzugt geschützt in einem KG-Rohr in das Becken 3 eingeführt und dort an den, nahe am Bodenbereich 12 angeordneten Belüfter angeschlossen wird.

Vom Hauptklärbecken 3 wird wiederum ein Überlauf zum nächsten Becken, dem Nachklärbecken 4, eingesetzt. Dieser Überlauf wird ähnlich zum Überlauf zwischen Vorklärbecken 2 und Hauptklärbecken 3 hergestellt und ausgestaltet, wobei eine Rückhaltevorrichtung für die Biofilmschwebeteilchen auf der Hauptklärbeckenseite vorzusehen ist. Vom Nachklärbecken 4 führt der Ablauf Y das geklärte Abwasser als Klarwasser ab. Der Ablauf Y ist an einer Montagefläche 44 des Nachklärbeckens 4, beispielsweise in Form von KG-Rohren dichtend angeschlossen. Dies wird ebenfalls von Monteuren vor Ort durchgeführt. Weiter kann im Nachklärbecken 4 ein Schlammheber eingebaut werden, der im Nachklärbecken 4 sedimentierten Schlamm in die Biologie des Hauptklärbeckens 3 und/oder in das Vorklärbecken 2 zurückfördern kann.

Ein entsprechend für den Einsatz als Kleinkläranlage vormontierter Behälter 1 kann von einem Gabelstapler über die Gabelstapleraufnahmen 121 im Bodenbereich 12 und/oder von einem Kran mittels der Kranösen 131 gehandhabt und auf einen LKW aufgeladen werden. Dank der bevorzugten maximalen Größe von 2,25 m x 2,25 m x 2,25 m passen diese Kunststoffbehälter auch in Standardüberseecontainer der Größe 20' und 40'. Die Behälter können somit auch bestückt mit der erforderlichen Technik über weite Strecken sicher transportiert werden.

Am Einbauort für den Kunststoffbehälter als Kleinkläranlage wird an der gewünschten Stelle eine Grube in der erforderlichen Tiefe und Abmessung von einem Tiefbauunternehmen vorbereitet. Mit dem dafür erforderlichen Bagger kann der Behälter 1 vom anliefernden LKW über zwei Ladestropps an den Kranösen 131 angehoben und in die ausgeschachtete Grube eingesetzt werden. Vorher wird der Boden der Grube mit Füllsand eingeebnet und verfestigt.

Auf diese nivellierte Fläche wird der Behälter 1 aufgesetzt. Nunmehr erfolgt die seitliche Verfüllung mit Füllsand sowie die Füllung des im Zentrum 5 befindlichen Hohlraumes über die Durchgriffsöffnung 51. Dabei wird der Füllsand in geeigneter Art verfestigt. Vor der endgültigen Auffüllung werden die erforderlichen Anschlüsse, nämlich Zulauf X, Ablauf Y sowie Druckluftanschluss einschließlich etwaiger Versorgungs- und Steuerleitungen installiert und anschließend die Grube vollständig auf Umgebungsniveau gefüllt. Es bleiben dann lediglich drei Mannlochöffnungen 21, 31, 41 mit verschließbaren Deckeln an der Oberfläche sichtbar, die einen Zugriff für lnstallations- und Wartungsarbeiten in den Behälter 1, nämlich das jeweilige Becken 2, 3, 4 erlauben.

### Bezugszeichenliste

- 1: Behälter, Kunststoffbehälter
- 11: Außenwand
- 111: Sicke
- 12: Bodenbereich
- 121: Gabelstapleraufnahme
- 13: Kopfbereich
- 131: Kranöse
- 14: Wulst

- 2: Becken, Vorklärbecken
- 21: Öffnung, Mannloch
- 22: ebener Flächenabschnitt
- 23: Trennwand
- 24: Montagefläche
- 25: Schwelle

- 3: Becken, Hauptklärbecken
- 31: Öffnung, Mannloch
- 32: ebener Flächenabschnitt
- 33: Trennwand
- 34: Anschlussfläche

- 4: Becken, Nachklärbecken
- 41: Öffnung, Mannloch
- 42: ebener Flächenabschnitt
- 43: Trennwand
- 44: Montagefläche

- 5: Zentrum
- 51: Durchgriffsöffnung

- X: Zulauf
- Y: Ablauf

## Patentansprüche

1. Kunststoffbehälter (1) für Kleinkläranlagen, Abscheider für Abwässer von Tankstellen, Industriebetrieben oder Teichfilter für Schwimm- und Badeteiche oder Fischteiche mit Außenwänden (11), einem Bodenbereich (12) und einem Kopfbereich (13), wobei der Behälter (1) mindestens zwei Becken (2, 3) aufweist, die durch Trennwände (23, 33) voneinander getrennt sind, wobei
- im Kopfbereich (13) je Becken (2, 3) eine Zugriffsöffnung (21, 31) vorgesehen ist,
- die Trennwände (23, 33) durch spitze Aufwölbungen vom Bodenbereich (12) bis zum Kopfbereich (13) ausgebildet sind, wobei die Becken mit bis oben hin geschlossenen Trennwänden vollständig voneinander getrennt sind, und
- der Behälter (1) einstückig im Rotationsformen hergestellt ist.

2. Kunststoffbehälter für Kleinkläranlagen nach Anspruch 1, **dadurch gekennzeichnet, dass** genau drei voneinander durch Trennwände (23, 33, 43) getrennte Becken (2, 3, 4), nämlich Vorklärbecken (2), Hauptklärbecken (3) und Nachklärbecken (4) vorgesehen sind.

3. Kunststoffbehälter nach Anspruch 1 oder 2, **dadurch gekennzeichnet, dass** die Außenwände (11) vom Bodenbereich (12) leicht in einem Winkel von 1 ° bis 5° zur Vertikalen nach innen geneigt aufstehen.

4. Kunststoffbehälter nach Anspruch 1, 2 oder 3, **dadurch gekennzeichnet, dass** im Übergang zwischen Bodenbereich (12) und Außenwänden (11) eine nach außen vorstehende, umlaufende Wulst (14) ausgebildet ist.

5. Kunststoffbehälter nach Anspruch 1, 2, 3 oder 4, **dadurch gekennzeichnet, dass** der Bodenbereich (12) planebene Flächenabschnitte (22, 32, 42) aufweist, die bei bestimmungsgemäßer Lage des Behälters (1) auf einer untersten horizontalen Ebene liegen.

6. Kunststoffbehälter nach einem der vorangehenden Ansprüche, **dadurch gekennzeichnet, dass** die dem jeweiligen Becken (2, 3, 4) im Kopfbereich (13) zugeordnete Öffnung eine Mannöffnung (21, 31, 41) mit zugeordnetem, abnehmbaren Deckel ist, wobei die Öffnung (21, 31, 43) ein den Kopfbereich (13) überragenden zylindrischen Domabschnitt aufweist, in dessen oberen Rand der kreisscheibenförmige Deckel dichtend einlegbar ist.

7. Kunststoffbehälter nach einem der vorangehenden Ansprüche, **dadurch gekennzeichnet, dass** die Becken (2, 3, 4) um ein Zentrum (5) angeordnet sind, wobei das Zentrum (5) eine im wesentlichen vertikal orientierte Durchgriffsöffnung (51) bildet, bei der der für die Trennwände (23, 33, 43) aufgewölbte Bodenbereich (12) bis an den Kopfbereich (13) reicht.

8. Kunststoffbehälter nach einem der Ansprüche 2 bis 7, **dadurch gekennzeichnet, dass** er im wesentlichen quadratischen Grundriss hat, wobei das Vorklärbecken (2) zwei aneinander grenzende Quadranten, das Hauptklärbecken (3) einen Quadranten und das Nachklärbecken (4) den letzten Quadranten des Grundrisses einnimmt.

## Claims

1. A plastics container (1) for small clarification plants, separators for waste water from filling stations, industrial establishments or pond filters for swimming and bathing ponds or fish ponds, having outer walls (11), a bottom region (12) and a top region (13), wherein the container (1) has at least two tanks (2, 3) separated from one another by separating walls (23, 33), wherein
- one access opening (21, 31) per tank (2, 3) is provided in the top region (13),
- the separating walls (23, 33) are formed by pointed bulges from the bottom region (12) to the top region (13), wherein the tanks are completely separated from one another by separating walls closed up to the top, and
- the container (1) is manufactured in one piece using rotation moulding.

2. A plastics container for small clarification plants according to claim 1, **characterised in that** exactly three tanks (2, 3, 4) separated from one another by separating walls (23, 33, 43) are provided, namely primary clarifier (2), main clarifier (3) and secondary clarifier (4).

3. A plastics container according to claim 1 or 2, **characterised in that** the outer walls (11) project from the bottom region (12) at a slight inwards incline of 1° to 5° to the vertical.

4. A plastics container according to claim 1, 2 or 3, **characterised in that** an outwardly-protruding, circumferential swelling (14) is formed in the transition between the bottom region (12) and the outer walls (11).

5. A plastics container according to claim 1, 2, 3 or 4, **characterised in that** the bottom region (12) has planar surface portions (22, 32, 42) which lie on a lowermost, horizontal plane when the container (1) is in the intended position.

6. A plastics container according to any one of the preceding claims, **characterised in that** the opening associated in the top region (13) with the respective tank (2, 3, 4) is a manhole (21, 31, 41) with an associated, removable cover, wherein the opening (21, 31, 43 [sic]) has a cylindrical dome portion, projecting above the top region (13), in whose upper edge there can be sealingly placed the cover in the form of a circular disc.

7. A plastics container according to any one of the preceding claims, **characterised in that** the tanks (2, 3, 4) are arranged about a centre (5), wherein the centre (5) forms a substantially vertically-directed through opening (51) at which the bottom region (12) bulged for the separating walls (23, 33, 43) extends to the top region (13).

8. A plastics container according to any one of claims 2 to 7, **characterised in that** it has a substantially square horizontal section, wherein the primary clarifier (2) occupies two adjacent quadrants, the main clarifier (3) occupies one quadrant and the secondary clarifier (4) occupies the last quadrant of the horizontal section.

## Revendications

1. Conteneur en matière plastique (1) pour de petites installations d'épuration, des collecteurs d'eaux usées dans les stations-service, les entreprises industrielles ou des filtres pour étangs de baignade ou étangs de pêche, comportant des parois extérieures (11), une partie de fond (12) et une partie supérieure (13), ledit conteneur (1) comportant au moins deux bacs (2, 3) qui sont séparés les uns des autres par des cloisons (23, 33), dans lequel
- il est prévu dans la partie supérieure (13) une ouverture d'accès (21, 31) pour chaque bac (2, 3),
- les cloisons (23, 33) sont formées par des voûtes pointues de la partie de fond (12) jusqu'à la partie supérieure (13), les bacs étant totalement séparés les uns des autres par des cloisons fermées jusqu'en haut, et
- le conteneur (1) est réalisé d'un seul tenant par rotomoulage.

2. Conteneur en matière plastique pour de petites stations d'épuration selon la revendication 1, **caractérisé en ce qu'**il est prévu exactement trois bacs (2, 3, 4) séparés les uns des autres par des cloisons (23, 33, 43), à savoir un bac de décantation primaire (2), un bac de traitement principal (3) et un bac de décantation finale (4).

3. Conteneur en matière plastique selon la revendication 1 ou 2, **caractérisé en ce que** les parois extérieures (11) remontent depuis la partie de fond (12) en étant légèrement inclinées vers l'intérieur selon un angle de 1 ° à 5° par rapport à la verticale.

4. Conteneur en matière plastique selon la revendication 1, 2 ou 3, **caractérisé en ce qu'**un bourrelet (14) périphérique saillant vers l'extérieur est formé dans la zone de transition entre la partie de fond (12) et les parois extérieures (11).

5. Conteneur en matière plastique selon la revendication 1, 2, 3 ou 4, **caractérisé en ce que** la partie de fond (12) comporte des parties de surface (22, 32, 42) planes qui reposent sur un plan horizontal le plus bas lorsque le conteneur (1) est positionné conformément à sa destination.

6. Conteneur en matière plastique selon l'une des revendications précédentes, **caractérisé en ce que** l'ouverture associée à chaque bac (2, 3, 4) dans la partie supérieure (13) est une trappe de visite (21, 31, 41) avec un couvercle amovible associé, ladite ouverture (21, 31, 41) comportant une partie de dôme cylindrique qui dépasse au-dessus de la partie supérieure (13) et dans le bord supérieur de laquelle peut être posé de manière étanche le couvercle en forme de disque circulaire.

7. Conteneur en matière plastique selon l'une des revendications précédentes, **caractérisé en ce que** les bacs (2, 3, 4) sont disposés autour d'un centre (5), ledit centre (5) formant une ouverture de passage (51) orientée sensiblement verticalement, au niveau de laquelle la partie de fond (12) bombée en voûte pour les cloisons (23, 33, 43) s'étend jusqu'à la partie supérieure (13).

8. Conteneur en matière plastique selon l'une quelconque des revendications 2 à 7, **caractérisé en ce qu'**il a un plan au sol sensiblement carré, le bac de décantation primaire (2) couvrant deux quadrants adjacents, le bac de traitement principal (3) couvrant un quadrant et le bac de décantation finale (4) couvrant le dernier quadrant du plan au sol.
